# EUROPÄISCHE PATENTSCHRIFT

(11) **EP 1 299 462 B1**
(45) Veröffentlichungstag und Bekanntmachung des Hinweises auf die Patenterteilung: **22.08.2007**
(21) Anmeldenummer: 01940572.9
(22) Anmeldetag: 15.06.2001
(51) Int. Cl.: C08J 9/12, B01D 67/00, B29C 44/50

(54) **MEMBRAN UND DEREN VERWENDUNG**
MEMBRANE AND THE USE THEREOF
MEMBRANE ET UTILISATION DE CELLE-CI

(30) Priorität: 08.07.2000 DE 10033401
(43) Veröffentlichungstag der Anmeldung: 09.04.2003
(73) Patentinhaber: Universität Twente, 7500 AH Enschede (NL)
(72) Erfinder: KRAUSE, Bernd, NL-7523 BE Enschede (NL); MÖHLENKAMP, Christel, 49733 Haren (DE); SIJBESMA, Hylke, Pieter, NL-7522 ZA Enschede (NL); STRAHTMANN, Heiner, 72076 Tübingen (DE); WESSLING, Matthias, NL-7531 EK Enschede (NL)
(74) Vertreter: Weber, Roland
(86) Internationale Anmeldenummer: PCT/EP2001/006730
(87) Internationale Veröffentlichungsnummer: WO 2002/004554

(56) Entgegenhaltungen:
- DE-A- 19 907 824
- US-A- 5 116 883
- US-A- 5 422 377
- US-A- 5 710 187

## Beschreibung

Die Erfindung betrifft Membranen, die für Gastrennungen, Mikro- oder Ultrafiltrationen und insbesondere für medizinische Zwecke, wie für die Hämodialyse, Hämofiltration, Hämodiafiltration, Plasmapherese oder Immunotherapie, verwendet werden können.

Aus der DE-A-19 520 188 ist ein Verfahren zur Herstellung von Polymerhohlfadenmembranen bekannt, bei dem ein geschmolzenes Polymer zur Bildung der Hohlfadenmembranen durch eine Extrusionseinrichtung geführt wird, wobei das Polymer unter Druck vor Eintritt in ein die Schmelze formendes Extrusionswerkzeug der Extrusionseinrichtung mit Gas beladen wird und wobei sich infolge eines beim Austritt des Polymers aus der Extrusionseinrichtung in vorbestimmbarem Maße erfolgenden Druckabfalls und der damit einhergehenden Expansion des Gases im Polymer eine poröse Hohlfadenmembran bildet. Die mit diesem Verfahren erzielte Offenporigkeit und Porengröße ergeben keine befriedigenden Trennergebnisse, da die prozentuale Offenporigkeit zu gering ist und die Poren zu groß sind. Die Porengröße bestimmt die Trennwirkung und der Grad der Offenporigkeit die Membraneffizienz.

Die WO 91/08 243 beschreibt ein Verfahren zur Herstellung offenzelliger Polyurethanschaumstoffe durch Vermischen eines Diisocyanates, eines Wassertoffdonors, wenigstens eines oberflächenaktiven Stoffes, wenigstens eines Katalysators und eines Blähmittels, welches zweckmäßig Kohlendioxid ist, Unterdrucksetzen des Gemisches in einer Mischzone, um das Blähmittel in flüssigem Zustand bei Umgebungstemperatur zu halten, Ausstoßen des Gemisches in eine Umgebung von Atmosphärendruck unter augenblicklichem Verdampfen des Blähmittels und Härtung des resultierenden Schaumstoffes bei Umgebungstemperatur. Für dieses Verfahren gelten die gleichen Nachteile wie für das oben geschilderte.

Die ältere, aber nicht vorveröffentlichte deutsche Patentanmeldung Nr. 199 07 824.6 betrifft eine Membran, die in der Weise herstellbar ist, daß man ein Polymer oder Polymerengemisch in die gewünschte Form bringt, bei Überatmosphärendruck vor oder nach der Formgebung mit einem Gas belädt, danach das mit Gas beladene Polymer bei einer Temperatur oberhalb der Glasübergangstemperatur der Polymer/Gas-Mischung schäumt und abschließend die Schaumstruktur unter Abkühlen stabilisiert, wobei man das mit Gas beladene Polymer mit einem Gehalt eines das Polymer lösenden oder quellenden Fluids schäumt. Bei der Herstellung dieser Membranen ist es erforderlich, sie zur Entfernung von Lösungsmittelresten zu waschen und aus praktischen Gründen das Lösungsmittel zu rezyklieren.

Die US-A 5,422,377 beschreibt ein Verfahren zur Herstellung dünner mikroporöser Schaumstoff-Filme durch Bildung eines Filmes einer Lösung eines organischen Polymers in einem ersten Lösungsmittel, Behandlung mit einem verdichteten Gas, in dem das Lösungsmittel lösbar, das Polymer aber unlösbar ist. Trennung in zwei Phasen und Gewinnung des mikroporösen Filmes aus der polymerreichen Phase.

Die US-A 5,710,187 betrifft eine katalytische Kondensationspolymerisation mit anschließender Zugabe von CO₂ und Extraktion zur Gewinnung nanoporöser Polymere.

Die der Erfindung zugrundeliegende Aufgabe bestand nun darin, Membranen, insbesondere Flächen- oder Hohlfasermembranen, zu erhalten, die eine möglichst hohe Trennwirkung und gleichzeitig hohe Membraneffizienz besitzen.

Erfindungsgemäß wird diese Aufgabe mit einer Membran gelöst, die herstellbar ist, indem man ein Polymer oder Polymerengemisch in die gewünschte Form bringt, bei Überatmosphärendruck vor oder nach der Formgebung mit einem Gas belädt, danach das mit Gas beladene Polymer oder Polymerengemisch bei einer Temperatur oberhalb der Glasübergangstemperatur der Polymer/Gas-Mischung schäumt und abschließend die Schaumstruktur stabilisiert, wobei man das mit Gas beladene Polymer oder Polymerengemisch bei einer Gaskonzentration in dem Polymer oder Polymerengemisch oberhalb einer kritischen Konzentration und bei einer Temperatur, die für die jeweilige Gaskonzentration unterhalb der kritischen Temperatur liegt, schäumt. Die Stabilisierung der Schaumstruktur erfolgt zweckmäßig unter Abkühlen, vorzugsweise durch Abschrecken mit einer Ethanol/Wasser-Mischung.

Die Erfindung betrifft auch die Verwendung einer solchen Membran für medizinische Zwecke, insbesondere für die Hämodialyse, Hämofiltration, Hämodiafiltration, Plasmapherese, Immunotherapie, Mikro- oder Ultrafiltration oder Gastrennung.

Des weiteren betrifft die Erfindung auch die Verwendung einer Membran, bestehend aus einem Polymer oder Polymerengemisch mit einer gas- bzw. flüssigkeitsdurchlässigen bikontinuierlichen Schaumstruktur mit Öffnungen im Inneren, deren Durchmesser unter 500 nm, vorzugsweise unter 250 nm, insbesondere unter 200 nm liegt, für medizinische Zwecke, insbesondere für die Hämodialyse, Hämofiltration, Hämodiafiltration, Plasmapherese, Immunotherapie, Mikro- oder Ultrafiltration oder Gastrennung.

Die erfindungsgemäßen Membranen haben eine perkolierende, micro- bis nanoporöse Morphologie und damit eine hohe Membraneffizienz und gute Trennwirkung. Sie benötigen beim Schäumen keinen Gehalt an das Polymer lösendem oder quellendem Fluid, so daß die Nachteile einer zusätzlichen Waschstufe und Lösungsmittelrezyklierung fortfallen.

Die Perkolation der Membranen kann auf folgende Weise bestimmt und beurteilt werden:
a) Mit Hilfe von Rasterelektronenmikroskopaufnahmen:
   Hierbei wird die Probe in flüssigem Stickstoff gebrochen und die Bruchkante analysiert. Zeigen die Rasterlektronenmikroskopaufnahmen Öffnungen oder Durchbrüche in der Schaummorphologie, so deutet dies eine Perkolation an.
b) Mit Hilfe von Durchflußmessungen:
   Hierbei wird eine Probe in einer entsprechenden Meßeinrichtung fixiert, wobei die Enden der Membran jeweils in flüssigem Stickstoff gebrochen wurden. Die Probe wird in ein Harz eingebettet, so daß die Oberflächen und Seitenflächen vollständig abgedeckt sind. Ein offenes Ende wird mit einem Gas oder einer Flüssigkeit beaufschlagt, welches sich unter Druck befinden kann. Durch Messung des Volumenstromes an Gas oder Flüssigkeit kann die Perkolation charakterisiert werden. Die Perkolation zeichnet sich durch einen signifikant höheren Fluß im Vergleich zu geschlossenporigen Proben aus.
c) Durch Messen der kapillaren Steighöhe:
   Hierbei wird eine Probe (Länge: 4 cm, Breite: 1 cm, Dicke: ≤300 im, Dicke des geschäumten Filmes) in einer entsprechenden Meßaufstellung fixiert, wobei die Enden die Polymerprobe jeweils in flüssigem Stickstoff gebrochen wird. Das Ende der fixierten Probe taucht ca. 2 bis 3 mm in eine Flüssigkeit oder Lösung ein. Nach entsprechender Zeit wird die Steighöhe des Flüssigkeitsspiegels in der Membran gemessen. Anhand von Gewichtsveränderungen sowie Steighöhe kann die Perkolation charakterisiert werden. Geschlossenporige Proben nehmen keine Flüssigkeit auf, und eine Steighöhe kann nicht gemessen werden.

Für die Herstellung der erfindungsgemäßen Membranen kommen drei Verfahrenstypen in Betracht, die als solche an sich bekannt sind.

Die erste Verfahrenstype ist das sogenannte Druckzellenverfahren, welches diskontinuierlich arbeitet und bei dem das Polymer oder die Polymermischung zunächst in die gewünschte Form gebracht und sodann bei Überatmosphärendruck und einer unter der Glasübergangstemperatur der Polymer/Gas-Mischung liegenden Temperatur mit einem Gas beladen wird. Dann wird die Temperatur über die Glasübergangstemperatur, aber unterhalb der kritischen Temperatur der Polymer/Gas-Mischung erhöht, wie durch Eintauchen in ein Heizbad, und dabei das Gas aus dem Formling ausgetrieben, wobei sich die erwünschte bikontinuierliche Schaumstruktur bildet. Die Überführung aus der Druckzelle in das Heizbad muß möglichst schnell erfolgen, da das gelöste Gas bei Umgebungsdruck schnell wieder aus dem Polymer diffundiert. Nach erfolgtem Schäumen ist es zweckmäßig, den Polymerformling in einer Ethanol/Wasser-Mischung bei ca. 20 °C abzuschrecken.

Die zweite Verfahrenstype ist das sogenannte Autoklavenverfahren, bei dem die Beladung des Polymers oder der Polymerenmischung mit dem Gas bei einer Temperatur oberhalb der Glasübergangstemperatur der Polymer/Gas-Mischung erfolgt und das Schäumen durch spontanes Aufheben des Druckes eingeleitet wird. Im Gegensatz zu dem Druckzellenverfahren, bei dem man das mit Gas beladene Polymer gewöhnlich in ein Heizbad überführt, um die Temperatur oberhalb der Glasübergangstemperatur, aber unterhalb der kritischen Temperatur der Polymer/Gas-Mischung zu erreichen, ist bei dem Autoklavenverfahren ein solches Aufheizen nicht erforderlich, da sich das Polymer bereits beim Beladen mit dem Gas auf der erforderlichen Temperatur oberhalb der Glasübergangstemperatur befindet.

Die dritte Verfahrenstype ist das sogenannte Extrusionsverfahren, bei dem man in einem formgebenden Extrusionswerkzeug eine Schmelze des Polymers oder des Polymerengemisches mit dem Gas belädt. Beim Austreten aus dem Extrusionswerkzeug und dem dabei herbeigeführten Druckabfall kommt es zum Schäumen. Im Gegensatz zu den beiden obenbeschriebenen Verfahrenstypen handelt es sich hier um ein kontinuierliches Verfahren.

Derzeit ist das Druckzellenverfahren für die erfindungsgemäßen Membranen als bevorzugt anzusehen.

Die Gaskonzentration in dem Polymer oder Polymerengemisch sowie die Temperatur beim Schäumen sind entscheidend dafür, ob erfindungsgemäß eine bikontinuierliche Schaumstruktur mit micro- bis nanoporöser perkulierender Morphologie erhalten werden kann.

Die Sättigungszeit in der Druckzelle hängt von dem oder den verwendeten Polymeren und der zu erreichenden kritischen Konzentration ab. Die Transferzeit von der Druckzelle zum Heizbad muß, wie erwähnt, möglichst kurz sein und gewährleisten, daß beim Schäumen, also im Heizbad, die Gaskonzentration in dem Polymer oder Polymerengemisch noch oberhalb der kritischen Konzentration liegt. Durch Veränderung der Schäumzeit im Heizbad kann die Perkolation verändert werden. Für eine reproduzierbare Herstellung ist es daher zweckmäßig, durch apparative Voraussetzungen die Transferzeit und Schäumzeit konstant zu halten und die Sättigungszeit in der Druckzelle für ein bestimmtes System von Polymeren und Schäumgas ebenfalls konstant zu halten.

Die erfindungsgemäßen Membranen können Flächenmembranen, Hohlfasermembranen oder Fasermembranen (Monofilamentmembranen) sein. Zweckmäßig bestehen sie aus einem amorphen oder semikristallinen Polymer oder Polymerengemisch. Als Polymere kommen beispielsweise und zweckmäßig Polyimide, Polyetherimide oder Polyethersulfone sowie Polymerengemische, die wenigstens 20% wenigstens eines dieser Polymere enthalten, in Betracht. Die Polymere werden zweckmäßig so abgemischt, daß bei in der Praxis annehmbaren Druckbedingungen ohne Schwierigkeiten eine Sättigungskonzentration oberhalb der kritischen Konzentration erreicht wird. Die kritische Konzentration, die beim Schäumen, also im Falle des Druckzellenverfahrens im Heizbad vorliegen muß, liegt zweckmäßig bei mindestens 40, vorzugsweise mindestens 43, besonders mindestens 45, insbesondere mindestens 47 cm³ (STP)/cm³ des Polymers oder Polymerengemisches. "STP" bedeutet bei Standard-Temperatur und -Druck. Diese Standardbedingungen liegen bei 0 °C und 0,1013 MPa.

Obwohl die Erfindung nicht auf ein spezielles Schäum- oder Beladungsgas beschränkt ist, ist CO₂ hierfür bevorzugt.

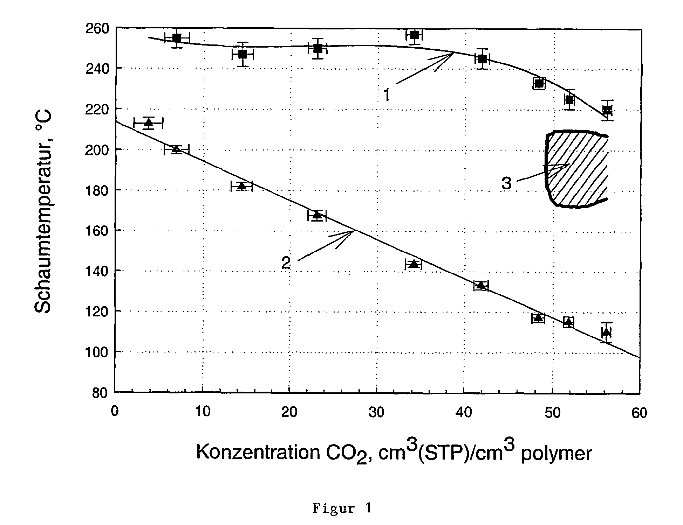

Das Schäumen erfolgt zweckmäßig bei einer Temperatur wenigstens 10 °C unterhalb der kritischen Temperatur. Für jede spezielle Kombination eines Polymers oder Polymerengemisches und Beladungsgas läßt sich nach Bestimmung der Glasübergangstemperatur dieser Polymer/Gas-Mischung und der kritischen Temperatur dieser Polymer/Gas-Mischung ein Schaumdiagramm aufstellen, welches in dem Bereich zwischen Gasübergangstemperatur und kritischer Temperatur einen Bereich oberhalb der kritischen Gaskonzentration enthält, in welchem die Morphologie bikontinuierlich ist. Fig. 1 zeigt das Schaumdiagramm für das System Polyetherimid (Ultem 1000-1000)/Kohlendioxid. Auf der Abszisse ist die gelöste Konzentration an Kohlendioxid in Kubikzentimetern CO₂ (STP)/cm³ (polymer) aufgetragen. Auf der Ordinate ist die Schäumtemperatur in Grad Celsius aufgetragen. Die durch 1 markierte Linie beschreibt die kritische Temperatur des beschriebenen Systems, oberhalb welcher keine geschäumten Morphologien mehr erhalten werden können. Die durch 2 markierte Linie beschreibt die Glasübergangstemperatur des beschriebenen Systems, unterhalb welcher keine geschäumten Morphologien mehr erhalten werden können. Somit zeigt sich, daß nur in dem Gebiet, welches sich zwischen den Linien 1 und 2 befindet, geschäumte Morphologien erhalten werden können. Bei Kohlendioxidkonzentrationen von <6 cm³ CO₂ (STP)/cm³ (Ultem 1000-1000) ist die Bestimmung der kritischen Konzentration experimentell schwierig. Dennoch ist zu erwarten, daß bei einer Konzentration von 0 cm³ CO₂ (STP)/cm³ (Ulten 1000-1000) die kritische Konzentration wieder die Glasübergangstemperatur des reinen Polymers erreicht. Die Glasübergangstemperatur des reinen Polymers zeigt sich in diesem Diagramm als der Schnittpunkt von Linie 2 mit der Ordinate bei 0 cm³ CO₂ (STP)/cm³ (Ultem 1000-1000). Das durch 3 definierte schraffierte Gebiet zeigt den Bereich im Schaumdiagramm, in welchem bikontinuierliche Membranstrukturen erhalten werden können. In diesem Fall wurde das Schaumdiagramm nur bis zu einer Kohlendioxidkonzentration von 57 cm³ CO₂ (STP)/cm³ (Ultem 1000-1000) untersucht. Die Strukturen, die innerhalb der Linien 1 und 2, jedoch außerhalb Gebietes 3 erhalten werden können, sind geschlossenzellige Morphologien.

Für jedes Polymer/Beladungsgas-System ist ein eigenes Schaumdiagramm zu erstellen und die Position des Bereiches zu ermitteln, in dem bikontinuierliche Membranstrukturen erhalten werden. Dieser Bereich kann verändert werden, wenn man die Schäumzeit, Polymereigenschaften und Transferzeit verändert. Diese Parameter werden daher im Verfahren zur Herstellung der erfindungsgemäßen Membranen zweckmäßig konstant gehalten.

Die Gaslöslichkeit von Beladungsgas (vorzugsweise CO₂) in Polymeren oder Polymerengemischen zur Ermittlung, welche Polymeren und Polymerengemische für die Herstellung erfindungsgemäßer Membranen günstigerweise eingesetzt werden, ist folgendermaßen:
Zur Bestimmung der Glaslöslichkeit von Kohlendioxid in Polymeren und Polymerblends wird eine Apparatur eingesetzt, die mit der von Koros und Paul (Koros, W. J., Paul, D. R., Design Considerations for Measurement of Gas Sorption in Polymers by Pressure Decay, J. Polym. Sci., 1976, 14, 1903-1907) entwickelten vergleichbar ist.
Die Sorptionsisothermen werden bei 25 °C bis zu einem Druck von 5 PMa für Kohlendioxid bestimmt. Die Angabe der Konzentration an gelöstem Kohlendioxid erfolgt in Kubikzentimetern CO₂ bei 0 °C und 0,1013 MPa (Standard Temperatur und Pressure [Druck] (STP) pro Kubikzentimeter Polymer; Kubikzentimeter CO₂ (STP)/cm³ (polymer).
Es ist auch möglich, andere volumetrische oder gravimetrische Verfahren einzusetzen, welche es erlauben, die Gaslöslichkeit in Polymeren zu bestimmen.
Die Glasübergangstemperatur (T_{g}) und die kritische Temperatur der Polymer/Gas-Mischungen sowie die kritische Gaskonzentration werden folgendermaßen bestimmt:

### Bestimmung der Glasübergangstemperatur (T_{g}) von Polymer/Gas-Mischungen

Teile der hergestellten Polymerfilme (Polymere oder Polymerblends) werden in einer Druckzelle mit dem Gas bzw. Gasgemisch beaufschlagt. Die Sättigungstemperatur beträgt 25 °C. Vorzugsweise wird die Sättigung mit dem Gas bzw. Gasgemisch bei der Temperatur durchgeführt, bei der auch die Sorptionsisotherme bestimmt wurde. Dies erlaubt die einfache Konversion der eingestellten Gasdrücke (Gleichgewichtsdrücke) in Konzentrationsangaben. Der Gasdruck, bei dem die Sättigung mit einem Gas (z.B. Kohlendioxid) vorgenommen wird, wird als Sättigungsdruck bezeichnet. Durch Variation des Sättigungsdruckes sowie der Sättigungstemperatur kann die entsprechende Sättigungskonzentration verlängert werden.

Der Sättigungszeitraum muß so gewählt werden, daß ein homogenes Konzentrationsprofil eingestellt wird. Im Falle von Kohlendioxid als physikalischem Blasmittel sowie amorphen Polymerfilmen mit einer Dicke von ca. 100 µm ist eine Sättigungszeit von ca. 2 h ausreichend.

Nach dem spontanen Ablassen des Sättigungsgases (z. B. Kohlendioxid) aus der Druckzelle wird die Polymerprobe entnommen und in ein Heizbad getaucht. Hierbei findet der Schäumvorgang statt. Die Eintauchzeit beträgt ca. 30 s. Während des Eintauchens wird die Probe ständig im Heizbadmedium bewegt. Hierbei ist darauf zu achten, daß die Polymerprobe vollständig in das Heizbadmedium eintaucht. Das Heizbadmedium muß so gewählt werden, daß die Polymerprobe während des Schäumvorganges weder chemisch noch physikalisch angegriffen wird. Nach dem Schäumvorgang wird die Kunststoffprobe in einer Ethanol/Wasser-Mischung (ca. 20 °C) abgeschreckt, vorzugsweise auf eine Temperatur unterhalb der Glasübergangstemperatur des Polymers.

Mehrere Proben, welche bei identischen Drücken mit dem Blasmittel (z. B. Kohlendioxid) gesättigt wurden, werden bei unterschiedlichen Temperaturen geschäumt. Hierbei sind die Temperaturen zu ermitteln, bei welchen die Polymerprobe noch transparent bleibt und diejenige Temperatur, bei welcher die Polymerprobe undurchsichtig, milchig wird. Durch weitere Eingrenzung dieses Temperaturbereiches durch Schäumen von Polymerproben bei Temperaturen, die in dem ersten ermittelten Bereich liegen, kann die Übergangstemperatur (Glasübergangstemperatur) für diesen Sättigungsdruck bzw. die entsprechende Sättigungskonzentration auf wenige Grad genau ermittelt werden. Eine Bestätigung der optisch ermittelten Glasübergangstemperatur erfolgt mit Hilfe des Rasterelektronenmikroskops (REM). Proben, welche auf eine Temperatur unterhalb der Glasübergangstemperatur der Polymer/Gas-Mischung erwärmt wurden, zeigen eine dichte Struktur. Bei Proben, welche auf eine Temperatur oberhalb der Glasübergangstemperatur der Polymer/Gas-Mischung erwärmt wurden, ist Zellbildung erkennbar. Die Glasübergangstemperatur einer Polymer/Gas-Mischung wird hier als der Mittelwert zwischen der Temperatur, bei welcher noch kein Schäumen erkennbar ist, und der Temperatur, bei welcher Zellbildung mit dem REM erkennbar ist, definiert.

Durch Variation des Sättigungsdruckes können unterschiedliche Blasmittelkonzentrationen im Polymer eingestellt werden. Auf diese Weise kann die Glasübergangstemperatur für unterschiedliche Blasmittelkonzentrationen mit Hilfe beschriebener Schäumtechnik für ein Polymer/-Blasmittel-Gemisch ermittelt werden.

### Bestimmung der kritischen Temperatur von Polymer/Gas-Mischungen

Die kritische Temperatur ist als die Schäumtemperatur definiert, oberhalb welcher keine geschäumten Polymermorphologien mehr erhalten werden können, d.h. oberhalb welcher die Dichte der nach dem Schäumvorgang erhaltenen Probe annähernd der Dichte (> 95% des Ausgangswertes) der eingesetzten Polymerprobe entspricht. Die kritische Temperatur liegt oberhalb der Glasübergangstemperatur der Polymer/Gas-Mischung.

Teile der hergestellten Polymerfilme (Polymere oder Polymerblends) werden in einer Druckzelle mit dem Gas bzw. Gasgemisch beaufschlagt. Die Sättigungstemperatur beträgt 25 °C.

Der Sättigungszeitraum muß so gewählt werden, daß ein homogenes Konzentrationsprofil eingestellt wird. Im Falle von Kohlendioxid als physikalischem Blasmittel sowie amorphen Polymerfilmen mit einer Dicke von ca. 100 µm ist eine Sättigungszeit von ca. 2 h ausreichend.

Nach dem spontanen Ablassen des Sättigungsgases (z. B. Kohlendioxid) aus der Druckzelle wird die Polymerprobe entnommen und in ein Heizbad getaucht. Hierbei findet der Schäumvorgang statt. Die Eintauchzeit beträgt ca. 30 s. Während des Eintauchens wird die Probe ständig im Heizbadmedium bewegt. Hierbei ist darauf zu achten, daß die Polymerprobe vollständig in das Heizbadmedium eintaucht. Das Heizbadmedium muß so gewählt werden, daß die Polymerprobe während des Schäumvorganges weder chemisch noch physikalisch angegriffen wird. Nach dem Schäumvorgang wird die Kunststoffprobe in einer Ethanol/Wasser-Mischung (ca. 20 °C) abgeschreckt, vorzugsweise auf eine Temperatur unterhalb der Glasübergangstemperatur des Polymers.
- Mehrere Proben, welche bei identischen Drücken mit dem Blasmittel (z. B. Kohlendioxid) gesättigt wurden, werden bei ansteigenden Temperaturen geschäumt. Hierbei zeigt sich, daß oberhalb einer bestimmten kritischen Temperatur keine geschäumten Polymermorphologien mehr erhalten werden können. Dies zeigt sich daran, daß die Polymerfilme nach dem Schäumvorgang wieder (milchig) transparent werden und die Dichte des geschäumten Materials annähernd wieder die Dichte des Ausgangsmaterials (Dichte des "reinen" Polymers) aufweist. Eine Bestätigung der optisch ermittelten kritischen Temperatur erfolgt mit Hilfe des Rasterelektronenmikroskops (REM). Proben, welche auf eine Temperatur oberhalb der kritischen Temperatur erwärmt wurden, zeigen eine dichte, nichtzellulare Struktur. Bei Proben, welche auf eine Temperatur unterhalb der kritischen Temperatur erwärmt wurden, ist Zellbildung erkennbar.
- Durch Variation des Sättigungsdruckes können unterschiedliche Blasmittelkonzentrationen im Polymer eingestellt werden. Auf diese Weise kann die kritische Temperatur für unterschiedliche Blasmittelkonzentrationen mit Hilfe beschriebener Schäumtechnik für ein Polymer/-Blasmittel-Gemisch ermittelt werden.

Die kritische Temperatur ist unter anderem von der Schäumzeit sowie der Konzentration des gelösten. Gases (z.B. der Kohlendioxidkonzentration) abhängig. Bei kürzeren Schäumzeiten erhöht sich die kritische Temperatur. Bei Erhöhung der Konzentration des gelösten Gases kann der Wert der kritischen Temperatur sinken. Daraus ergibt sich, daß für jede Schäumzeit sowie Konzentration des gelösten Gases die kritische Temperatur erneut ermittelt werden muß. Dies ist insbesondere der Fall, wenn ein anderes Schäumverfahren als beschrieben angewendet wird, da hier die Schäumzeiten vom beschriebenen Wert erheblich abweichen können.

### Bestimmung der kritischen Gas-Konzentration

Die kritische Gas-Konzentration ist definiert als die niedrigste Gas-Konzentration (vorzugsweise Sättigungskonzentration), oberhalb welcher bei einer Schäumtemperatur, eingegrenzt durch die Glasübergangstemperatur der Polymer/Gas-Mischung als Untergrenze und der kritischen Temperatur als Obergrenze für die entsprechende Gas-Konzentration (Sättigungskonzentration), Perkolationsverhalten mit Hilfe der unter b) bzw. c) beschriebenen Methoden für eine oder mehrere geschäumte Polymerproben nachgewiesen werden kann.

### a) im Druckzellenverfahren

- Teile der hergestellten Polymerfilme (Polymere oder Polymerblends) werden in einer Druckzelle mit dem Gas bzw. Gasgemisch beaufschlagt. Die Sättigungstemperatur beträgt 25 °C.
- Der Sättigungszeitraum muß so gewählt werden, daß ein homogenes Konzentrationsprofil eingestellt wird. Im Falle von Kohlendioxid als physikalischem Blasmittel sowie armorphen Polymerfilmen mit einer Dicke von ca. 100 µm ist eine Sättigungszeit von ca. 2 h ausreichend.
- Nach dem spontanen Ablassen des Sättigungsgases (z. B. Kohlendioxid) aus der Druckzelle wird die Polymerprobe entnommen und in ein Heizbad getaucht. Hierbei findet der Schäumvorgang statt. Die Eintauchzeit beträgt ca. 30 s. Während des Eintauchens wird die Probe ständig im Heizbadmedium bewegt. Hierbei ist darauf zu achten, daß die Polymerprobe vollständig in das Heizbadmedium eintaucht. Das Heizbadmedium muß so gewählt werden, daß die Polymerprobe während des Schäumvorganges weder chemisch noch physikalisch angegriffen wird. Nach dem Schäumvorgang wird die Kunststoffprobe in einer Ethanol/Wasser-Mischung (ca. 20 °C) abgeschreckt, vorzugsweise auf eine Temperatur unterhalb der Glasübergangstemperatur des Polymers.
- Mehrere Proben, welche bei identischen Drücken mit dem Blasmittel (z. B. Kohlendioxid) gesättigt wurden, werden bei ansteigenden Temperaturen geschäumt. Alle Proben, die bei Temperaturen oberhalb der Glasübergangstemperatur dieser Polymer/Gas-Mischung sowie unterhalb der kritischen Temperatur dieser Polymer/Gas-Mischung geschäumt wurden, werden auf Perkolationsverhalten untersucht.

### b) im Autoklavenverfahren

Bei dem oben beschriebenen Autoklavenverfahren erfolgt die Sättigung mit dem Gas bzw. Gasgemisch oberhalb der Glasübergangstemperatur der Polymer/Gas-Mischung, und der Schäumvorgang wird initiiert durch spontanes Ablassen des Gasdruckes. Daraus ergibt sich, daß die Schäumtemperatur identisch ist mit der Sättigungstemperatur. Werden nun Polymerproben bei ansteigenden Temperaturen mit dem Gas bzw. Gasgemisch gesättigt bzw. geschäumt, so zeigt sich, daß oberhalb einer kritischen Temperatur keine geschäumten Polymermorphologien mehr erhalten werden können. Durch Variation der Sättigungsbedingungen (Gasdruck, Temperatur) können unterschiedlich Sättigungskonzentrationen im Polymer bzw. Polymerblend eingestellt werden. Für diese veränderten Sättigungsbedingungen (Sättigungskonzentrationen) kann erneut die kritische Temperatur ermittelt werden.

### c) im Extrusionsverfahren

Bei dem oben beschriebenen Extrusionsverfahren erfolgt die Schaumbildung beim Austritt der Polymer/Gas-Mischung aus dem Extruderkopf. Hier kann durch Variation der Temperatur am Extruderkopf bzw. gleichzeitig der Temperatur der austretenden Polymer/Gas-Mischung die Temperatur ermittelt werden, oberhalb welcher keine geschäumte Polymermorphologie mehr erhalten werden. Wie bei dem bereits beschriebenen Autoklavenverfahren können durch Variation der Sättigungsbedingungen (Gasdruck, Temperatur) unterschiedliche Sättigungskonzentrationen im Polymer bzw. Polymerblend eingestellt werden. Für diese veränderten Sättigungsbedingungen (Sättigungskonzentrationen) kann erneut die kritische Temperatur ermittelt werden.

Zur Ermittlung des Schaumdiagrammes eines speziellen Polymer/Gas-Gemisches geht man also zweckmäßig so vor: Zunächst bestimmt man die Sorptionsisotherme oder -isobare, um festzustellen, ob die voraussichtliche kritische Konzentration erreicht werden kann. Dann stellt man den Druck und die Temperatur ein, um eine Konzentration von 50 cm³/cm³ Polymer zu bekommen. Sodann schäumt man bei steigenden Temperaturen und jeweils Bestimmung des Schaumcharakters beispielsweise durch Gasdurchflußmessung, wobei man die kritische Temperatur für eine bestimmte Schäumzeit ermittelt.

### Flächenmembranen nach dem Druckzellenverfahren können wie folgt hergestellt werden:

Es werden jeweils Lösungen der Kunststoffproben ("reine" Polymere oder Polymerblends) in den dafür geeigneten Lösungsmitteln (Tetrahydrofuran, 1-Methyl-2-pyrrolidon, Dichlorethan etc.) hergestellt.

Mit Hilfe von Streichmessern werden dünne Filme dieser Polymerlösungen auf Glasplatten gestrichen. Diese beschichteten Glasplatten werden danach bei ca. 20 bis 25 °C im Stickstoffstrom getrocknet, um den größten Teil des Lösungsmittels abzudampfen.

Nachdem die Filme "handtrocken" sind und von der Glasplatte abgenommen werden können, befindet sich immer noch ein erheblicher Lösungsmittelanteil in den Filmen. Dieser kann je nach Lösungsmittel, Kunststoff und Trocknungsbedingungen zwischen 0,5 und 15 Gew.% betragen. Die so hergestellten Filme haben eine Dicke von ca. 100 µm.

Die Filme werden im Vakuumtrockenschrank weiter getrocknet, bis die Lösungsmittelkonzentration unter 0,02 Gew.% abgesenkt ist.

Es können auch extrudierte Filme oder Formteile der entsprechenden Polymere oder Polymerblends (frei von Lösungsmittel) eingesetzt werden.

Die Filme der unterschiedlichen Polymere bzw. Polymermischungen werden bei erhöhtem Druck und Raumtemperatur (20 bis 25 °C) mit Kohlendioxid bis zu einer Gaskonzentration über einer kritischen Konzentration gesättigt. Die Begasungszeit beträgt bei Filmen dieser Dicke etwa 2 h. Die dafür erforderlichen Drücke variieren mit dem eingesetzten Polymer und sind von der Sorptionscharakteristik des entsprechenden Polymers abhängig. In jedem Fall muß eine kritische CO₂-Konzentration überschritten werden. Für einige Polymere wurde hier diese Konzentration bestimmt:

| | |
|---|---|
| Matrimid 5218: | 48 ± 5 cm³ CO₂ (STP)/cm³ (Polymer) |
| PEI Ultem 1000: | 47 ± 5 cm³ CO₂ (STP)/cm³ (Polymer) |
| PES 7300 P: | 47 ± 5 cm³ CO₂ (STP)/cm³ (Polymer) |

Diese ermittelten Konzentrationen sind gekoppelt an das Druckzellenverfahren, eine Sättigungszeit von 120 min bei 25 °C sowie eine Schäumzeit von 30 s. Bei Variation des Prozesses ist diese kritische Grenzkonzentration erneut zu ermitteln.

Nach Ablassen des Druckes und Öffnen der Druckzelle wird die Polymerprobe entnommen und für ca. 30 s in ein Heizbad getaucht. Hierbei findet der Schäumvorgang statt. Die Temperatur des Heizbades muß oberhalb der Glasübergangstemperatur der Polymer/Gas-Mischung und unterhalb einer kritischen Temperatur liegen. Danach wird die Polymerprobe in einer Ethanol/Wasser-Mischung (ca. 20 °C) abgeschreckt, vorzugsweise auf eine Temperatur unterhalb der Glasübergangstemperatur des Polymers.

In der Zeichnung zeigen
- Fig. 1: ein Schaumdiagramm für das System Polyetherimid (Ultem 1000-1000) und Kohlendioxid nach der Erfindung,
- Fig. 2: eine Rasterelektronenmikroskopaufnahme einer nach dem Vergleichsbeispiel 1 hergestellten Membran außerhalb der Erfindung,
- Fig.3: eine Rasterelektronenmikroskopaufnahme einer gemäß Beispiel 5 hergestellten Membran nach der Erfindung,
- Fig. 4: eine Rasterelektronenmikroskopaufnahme einer nach dem Vergleichsbeispiel 2 hergestellten Membran außerhalb der Erfindung und
- Fig. 5: eine Rasterelektronenmikroskopaufnahme einer nach Beispiel 6 hergestellten Membran nach der Erfindung.

### Beispiel 1

### Schäumen von Polyimid der Strukturformel

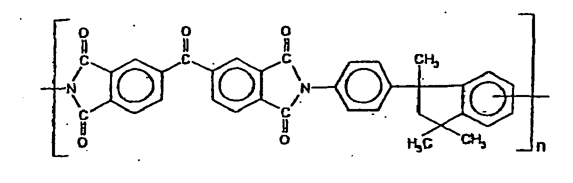

Lösen von 10 g Polyimid Matrimid® 5218 (Hersteller: Ciba Speciality Chemicals, Performance Polymers, Basel, Schweiz) in 40 g Tetrahydrofuran (THF) und Streichen eines 0,50 mm dicken Filmes auf eine Glasplatte. Trocknen des Filmes im Stickstoffstrom (ca. 20 °C) und daran anschließend bei 30 bzw. 150 °C im Vakuumtrockenschrank, bis die Lösungsmittelkonzentration (THF) <0,02 Gew.% beträgt. Sättigung von Teilen der so erhaltenen Filme (Dicke ≤100 im) bei 10, 20 sowie 50 bar und Raumtemperatur (20 bis 25 °C) mit Kohlendioxid in einer Druckzelle für 120 min. Das Schäumen der mit Kohlendioxid gesättigten Filme erfolgt bei Temperaturen zwischen 200 und 320 °C für 30 s. Es zeigt sich, daß die Proben, die mit einem CO₂-Gasdruck von 20 und 50 bar gesättigt wurden, bei Schäumtemperaturen zwischen 210 und 270 °C teilweise perkolierende, bikontinuierliche Strukturen aufweisen. Proben, die mit einem Gasdruck von 10 bar Kohlendioxid gesättigt wurden, wiesen keine perkolierende Struktur auf. Oberhalb von 320 °C konnten bei einer Schäumzeit von 30 s und einem Sättigungsdruck von 50 bar keine geschäumten Morphologien mehr erhalten werden. Der Nachweis der Perkolation erfolgt mit Durchflußmessungen.

| Schäumbedingungen: | |
|---|---|
| Sättigungsdruck: | 5 MPa |
| Sättigungsgas: | Kohlendioxid |
| Sättigungszeit: | 2 h |
| Schäumtemperatur: | 260 °C |
| Schäumzeit: | 30 s |

Interpretation einer Rasterelektronenmikroskopaufnahme (Vergrößerung 50 000): bikontinuierliche, perkolierende Morphologie mit Öffnungen in der Größenordnung von ca. 20 bis 40 nm. Nachweis des Perkolationsverhaltens erfolgte mit der beschriebenen Durchflußmessung.

| Schäumbedingungen: | |
|---|---|
| Sättigungsdruck: | 5 MPa |
| Sättigungsgas: | Kohlendioxid |
| Sättigungszeit: | 2 h |
| Schäumtemperatur: | 270 °C |
| Schäumzeit: | 30 s |

Interpretation einer Rasterelektronenmikroskopaufnahme (Vergrößerung 50 000): bikontinuierliche, perkolierende Morphologie mit Öffnungen in der Größenordnung von ca. 30 bis 90 nm. Nachweis des Perkolationsverhaltens wie oben.

### Beispiel 2

### Schäumen von Polyimid der Strukturformel

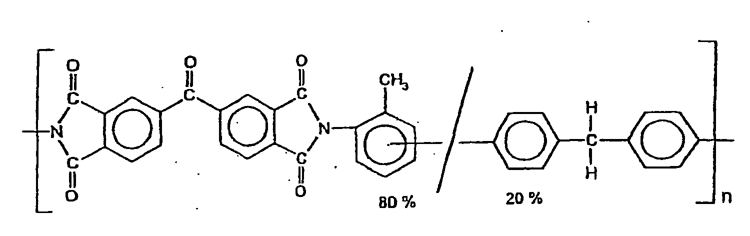

Lösen von 10 g Polyimid P 84® (Hersteller: HP Polymer GmbH, Lenzing, Österreich) in 40 g 1-Methyl-2-pyrrolidon (NMP) und Streichen eines 0,50 mm dicken Filmes auf eine Glasplatte. Trocknen des Filmes im Stickstoffstrom (ca. 20 °C) und daran anschließend bei 30 bzw. 150 °C im Vakuumtrockenschrank, bis die Lösungsmittelkonzentration (NMP) <0,02 Gew.% beträgt. Sättigung eines Teils des so erhaltenen Filmes (Dicke ≤100 µm) bei 30, 40 und 50 bar und Raumtemperatur (20 bis 25 °C) mit Kohlendioxid in einer Druckzelle für 120 min. Das Schäumen der mit Kohlendioxid gesättigten Filme erfolgt bei Temperaturen zwischen 180 und 280 °C für 30 s. Es zeigte sich, daß bei Schäumtemperaturen zwischen 220 und 270 °C bikontinuierliche Strukturen erhalten werden konnten. Der Nachweis der Perkolation erfolgt durch Messung der kapillaren Steighöhe.

| Schäumbedingungen: | |
|---|---|
| Sättigungsdruck: | 5 MPa |
| Sättigungsgas: | Kohlendioxid |
| Sättigungszeit: | 2 h |
| Schäumtemperatur: | 260 °C |
| Schäumzeit: | 30 s |

Interpretation einer Rasterelektronenmikroskopaufnahme (Vergrößerung 50 000): bikontinuierliche, perkolierende Morphologie mit Öffnungen in der Größenordnung von ca. 30 bis 150 nm. Nachweis des Perkolationsverhaltens erfolgte durch Messung der kapillaren Steighöhe.

### Beispiel 3

### Schäumen von Polyetherimid der Strukturformel

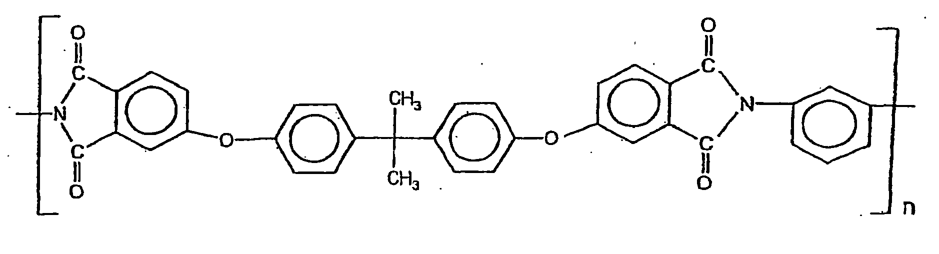

Lösen von 10 g Polyetherimid Ultem® 1000 (Hersteller: General Electric, Huntersville, NC, USA) in 40 g Chloroform und Streichen eines 0,50 mm dicken Filmes auf eine Glasplatte. Trocknen des Filmes im Stickstoffstrom (ca. 20 °C) und daran anschließend bei 30 bzw. 150 °C im Vakuumtrockenschrank, bis die Lösungsmittelkonzentration (Chloroform) <0,02 Gew.% beträgt. Sättigung eines Teils des so erhaltenen Filmes (Dicke ≤100 µm) bei 50 bar und Raumtemperatur (20 bis 25 °C) mit Kohlendioxid in einer Druckzelle für 120 min. Das Schäumen der mit Kohlendioxid gesättigten Filme erfolgt bei Temperaturen zwischen 110 und 250 °C für 30 s. Es zeigte sich, daß bei Schäumtemperaturen zwischen 170 und 205 °C bikontinuierliche Strukturen erhalten werden können. Oberhalb von 250 °C können bei einer Schäumzeit von 30 s und Sättigungsdrücken zwischen 10 und 54 bar keine geschäumten Morphologien mehr erhalten werden. Der Nachweis der Perkolation erfolgt wie in Beispiel 1. Man erhielt eines bikontinuierliche, perkolierende Morphologie.

### Beispiel 4

### Schäumen von Polyetherimid der Strukturformel

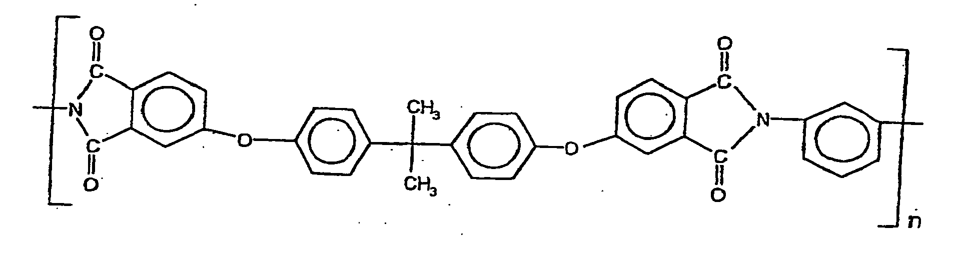

Bei Polyuetherimid Ultem® 1000-1000 (Hersteller: General Electric, Bergen op Zoom, Niederlande) handelte es sich um extrudierte Filme mit einer Dicke von 75 im. Die Filme wurden 24 h bei 150 °C im Vakuumtrockenschrank getrocknet. Sättigung eines Teils der so behandelten Filme bei 30, 40, 46 und 50 bar und Raumtemperatur (20 bis 25 °C) mit Kohlendioxid in einer Druckzelle für 120 min. Das Schäumen der mit Kohlendioxid gesättigten Filme erfolgt bei Temperaturen zwischen 130 und 250 °C für 30 s. Es zeigte sich, daß bei Schäumtemperaturen zwischen 150 und 210 °C bikontinuierliche Strukturen erhalten werden können, wobei der Gasfluß abhängig von der Sättigungskonzentration an gelöstem CO₂ ist. Oberhalb von 250 °C können bei einer Schäumzeit von 30 s und Sättigungsdrücken zwischen 10 und 54 bar keine geschäumten Morphologien mehr erhalten werden. Bei Proben, welche mit 30 bar Kohlendioxid gesättigt wurden, konnte bei keiner Schäumtemperatur eine perkolierende Struktur nachgewiesen werden, vielmehr eine geschlossenzellige Struktur. Der Nachweis der Perkolation erfolgte mit der obenbeschriebenen Durchflußmessung.

| Schäumbedingungen: | |
|---|---|
| Sättigungsdruck: | 5 MPa |
| Sättigungsgas: | Kohlendioxid |
| Sättigungszeit: | 2 h |
| Schäumtemperatur: | 180 °C |
| Schäumzeit: | 30 s |

Interpretation einer Rasterelektronenmikroskopaufnahme (Vergrößerung 30 000): bikontinuierliche, perkolierende Morphologie mit Öffnungen in der Größenordnung von ca. 50 bis 150 nm. Nachweis des Perkolationsverhaltens erfolgte mittels der obenbeschriebenen Durchflußmessung.

| Schäumbedingungen: | |
|---|---|
| Sättigungsdruck: | 5 MPa |
| Sättigungsgas: | Kohlendioxid |
| Sättigungszeit: | 2 h |
| Schäumtemperatur: | 195 °C |
| Schäumzeit: | 30 s |

Interpretation einer Rasterelektronenmikroskopaufnahme (Vergrößerung 50 000): bikontinuierliche, perkolierende Morphologie mit Öffnungen in der Größenordnung von ca. 30 bis 70 nm. Nachweis des Perkolationsverhaltens erfolgte mit der obenbeschriebenen Durchflußmessung.

### Vergleichsbeispiel 1 und Beispiel 5

### Schäumen von Polyethersulfon der Strukturformel

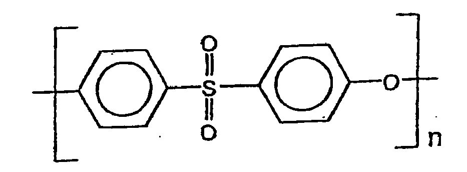

Lösen von 10 g Polyethersulfon Sumicaexcel® 7300 P (Hersteller: Sumitomo Chemicals, Japan) in 40g Methyl-2-pyrrolidon (NMP) und Streichen eines 0,50 mm dicken Filmes auf eine Glasplatte. Trocknen des Filmes bei 70 °C im Umlufttrockenschrank für 2 h und danach schrittweise Erhöhung der Temperatur auf 180 °C. Der Trocknungszeitraum bei 180 °C ist so einzustellen, daß die Lösungsmittelkonzentration (NMP) <0,02 Gew.% beträgt.

Sättigung eines Teils des so hergestellten Filmes (Dicke ≤100 im) bei
i) 57 bar und 0 °C
ii) 50 bar und 20 °C
iii) 40 bar und 20 °C
mit Kohlendioxid in einer Druckzelle für 120 min. Das Schäumen des mit Kohlendioxid gesättigten Filmes erfolgt bei Temperaturen (T_{foam}) zwischen 165 und 230 °C für 30 s. Oberhalb von 230 °C können bei einer Schäumzeit von 30 s und Sättigungsdrücken von 40 und 50 bar keine geschäumte Morphologien mehr erhalten werden. Es zeigt sich, daß bei folgenden Kombinationen (Schäumtemperaturen sowie Sättigungsbedingungen), siehe Tabelle 1, perkolierende, bikontinuierliche Strukturen erhalten werden konnten. Der Nachweis der Perkolation erfolgt mit der obenbeschriebenen Durchflußmessung.

**Tabelle 1**

| **Herstellung bikontinuierlicher, perkolierender Sumicaexcel® (7300 P) Morphologien** | | | | | |
|---|---|---|---|---|---|
| **Sättigungsbedingunge n** | **T_{foam}: 165 °C** | **T_{foam}: 175 °C** | **T_{foam}: 185 °C** | **T_{foam}: 195 °C** | **T_{foam}: 205 °C** |
| 57 bar CO₂ 0 °C | perkolierend | perkolierend | perkolierend | perkolierend | perkolierend |
| | | | | | |
| 50 bar CO₂ 20 °C | nicht perkolierend | nicht perkolierend | perkolierend | perkolierend | perkolierend |
| | | | | | |
| 40 bar CO 20 °C | nicht perkolierend | nicht perkolierend | nicht perkolierend | nicht perkolierend | nicht perkolierend |

### Vergleichsbeispiel 1

| Schäumbedingungen: | |
|---|---|
| Sättigungsdruck: | 4 MPa |
| Sättigungsgas: | Kohlendioxid |
| Sättigungszeit: | 2 h |
| Schäumtemperatur : | 185 °C |
| Schäumzeit: | 30 s |

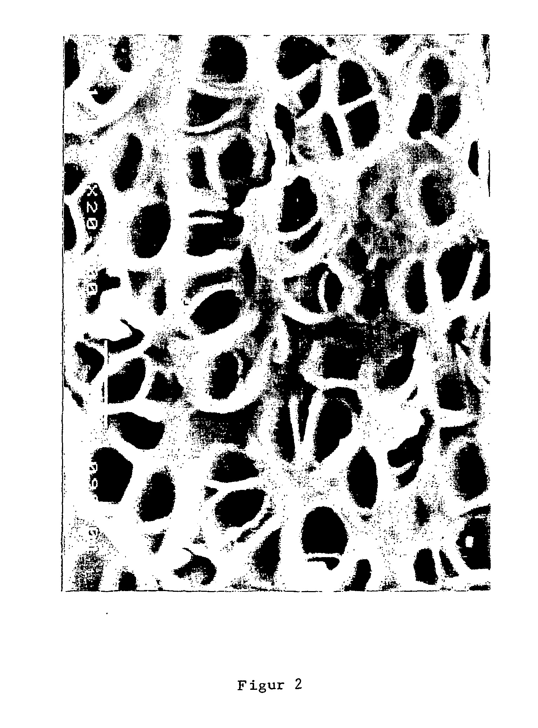

### Angaben zur Rasterelektronenmikroskopaufnahme: Fig. 2

| | |
|---|---|
| Vergrößerung: | 20 000 |

Weiße Markierung am unteren Rand entspricht 1 µm.

Interpretation: geschlossenzellige Morphologie mit Zellen in der Größenordnung von ca. 300 bis 800 nm, da die kritische Konzentration beim Sättigen mit 4 MPa CO₂ nicht erreicht wurde.

### Beispiel 5

| Schäumbedingungen: | |
|---|---|
| Sättigungsdruck: | 5 MPa |
| Sättigungsgas: | Kohlendioxid |
| Sättigungszeit: | 2 h |
| Schäumtemperatur: | 185 °C |
| Schäumzeit: | 30 s |

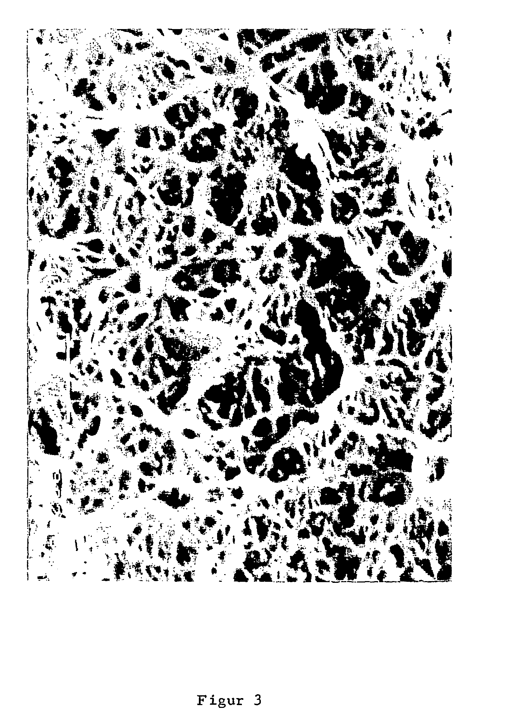

Angaben zur Rasterelektronenmikroskopaufnahme: Fig. 3

| | |
|---|---|
| Vergrößerung: | 20 000 |

Weiße Markierung am unteren Rand entspricht 1 µm.

Interpretation: bikontinuierliche, perkolierende Morphologie mit Öffnungen in der Größenordnung von ca. 200 bis 300 nm, da die kritische Konzentration beim Sättigen mit 5 MPa CO₂ überschritten wurde.

### Vergleichsbeispiel 2

### Schäumen von Polysulfon der Strukturformel

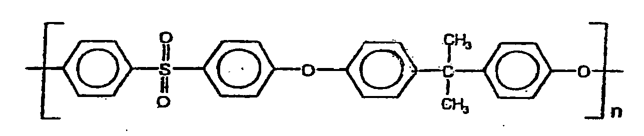

Lösen von 10 g Polysulfon Udel® P-3500 (Hersteller: BP-Amoco, Belgien) in 40 g Tetrahydrofuran (THF) und Streichen eines 0,50 mm dicken Filmes auf eine Glasplatte. Trocknen des Filmes bei 20 °C im Stickstoffstrom und daran anschließend bei 30 bzw. 150 °C im Vakuumtrockenschrank, bis die Lösungsmittelkonzentration (THF) <0,02 Gew.% beträgt.

Sättigung eines Teils des so hergestellten Filmes (Dicke ≤100 µm) bei 50 bar und 20 °C mit Kohlendioxid in einer Druckzelle für 120 min. Das Schäumen der mit Kohlendioxid gesättigten Filme erfolgt bei Temperaturen (T_{foam}) zwischen 110 und 230 °C für 30 s. Oberhalb von 230 °C konnten bei einer Schäumzeit von 30 s und einem Sättigungsdruck von 50 bar keine geschäumten Morphologien mehr erhalten werden. Es zeigt sich, daß bei allen eingestellten Schäumtemperaturen keine perkolierenden, bikontinuierlichen Strukturen erhalten werden können. Die Prüfung auf Perkolationsverhalten erfolgt mit der beschriebenen Durchflußmessung.

| Schäumbedingungen: | |
|---|---|
| Sättigungsdruck: | 5 MPa |
| Sättigungsgas: | Kohlendioxid |
| Sättigungszeit: | 2 h |
| Schäumtemperatur: | 145 °C |
| Schäumzeit: | 30 s |

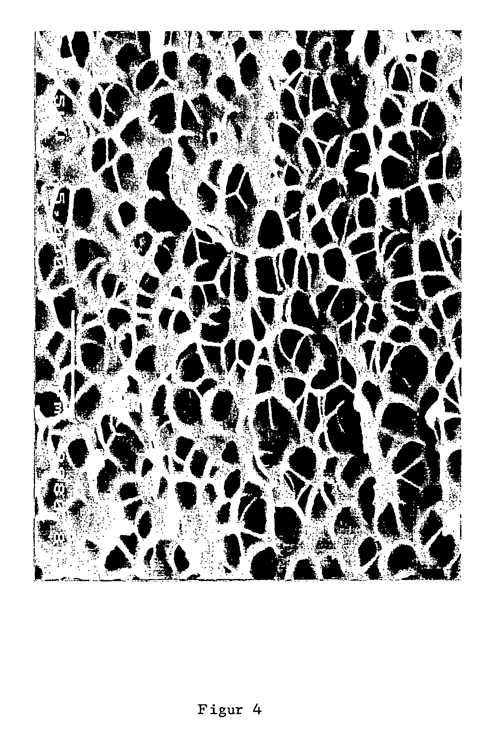

Angaben zur Rasterelektronenmikroskopaufnahme: Fig. 4

| | |
|---|---|
| Vergrößerung: | 5000 |

Weiße Markierung am unteren Rand entspricht 5 µm.

Interpretation: geschlossenzellige Morphologie mit Zellen in der Größenordnung von ca. 1 µm, da beim Sättigen mit 5 MPa CO₂ bei 20 °C die kritische Konzentration nicht erreicht wurde.

### Beispiel 6

Schäumen eines Polymerblends bestehend aus 80 Gew.% Udel® P-3500 (Polysulfon) sowie 20 Gew.% Matrimid® 5218.

Lösen von 8 g Udel® P-3500 sowie 2 g Matrimid® 5218 in 40 g Dichlormethan und Streichen eines 0,50 mm dicken Filmes auf eine Glasplatte. Trocknen des Filmes bei 50 °C im Umlufttrockenschrank für 2 h und danach schrittweise Erhöhung der Temperatur auf 195 °C. Der Trockenzeitraum bei 195 °C ist so einzustellen, daß die Lösungsmittelkonzentration (Dichlormethan) <0,02 Gew.% beträgt. Sättigung eines Teils des so erhaltenen Filmes (Dicke ≤ 100 µm) bei 50 bar und 20 °C mit Kohlendioxid in einer Druckzelle für 120 min. Das Schäumen der mit Kohlendioxid gesättigten Filme erfolgt bei Temperaturen (T_{foam}) zwischen 120 und 280 °C für 30 s. Oberhalb von 280 °C können bei einer Schäumzeit von 30 s und einem Sättigungsdruck von 50 bar keine geschäumten Morpholien mehr erhalten werden. Es zeigt sich, daß bei Schäumtemperaturen zwischen 170 und 200 °C perkolierende, bikontinuierliche Strukturen erhalten werden können. Die Prüfung auf Perkolationsverhalten erfolgt mit der obenbeschriebenen Durchflußmessung.

| Schäumbedingungen: | |
|---|---|
| Sättigungsdruck: | 5 MPa |
| Sättigungsgas: | Kohlendioxid |
| Sättigungszeit: | 2 h |
| Schäumtemperatur: | 190 °C |
| Schäumzeit: | 30 s |

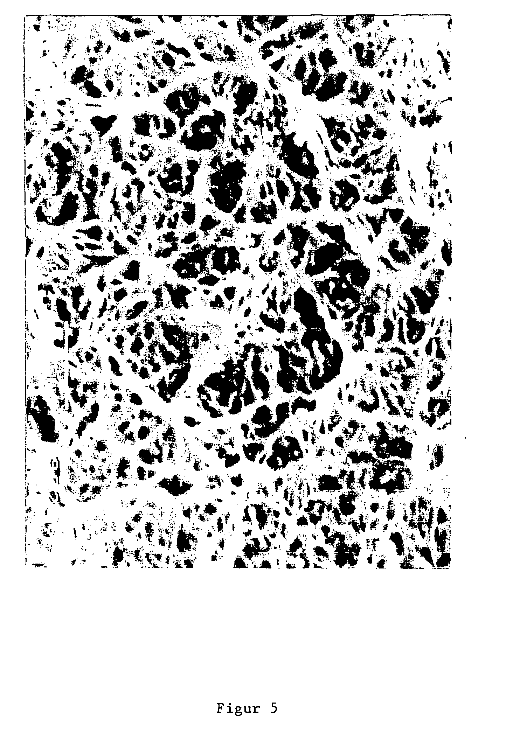

Angaben zur Rasterelektronenmikroskopaufnahme: Fig. 5

| | |
|---|---|
| Vergrößerung: | 20 000 |

Weiße Markierung am unteren Rand entspricht 1 µm.

Interpretation: bikontinuierliche, perkolierende Morphologie mit Öffnungen in der Größenordnung von ca. 200 bis 400 nm, da beim Sättigen die kritische Konzentration überschritten wurde.

## Patentansprüche

1. Membran, herstellbar, indem man ein Polymer oder Polymerengemisch in die gewünschte Form bringt, bei Überatmosphärendruck vor oder nach der Formgebung mit einem Gas belädt, danach das mit Gas beladene Polymer oder Polymerengemisch bei einer Temperatur oberhalb der Glasübergangstemperatur der Polymer/Gas-Mischung schäumt und abschließend die Schaumstruktur stabilisiert, **dadurch gekennzeichnet, daß** man das mit Gas beladene Polymer oder Polymerengemisch bei einer Gaskonzentration in dem Polymer oder Polymerengemisch oberhalb einer kritischen Konzentration und bei einer Temperatur, die für die jeweilige Gaskonzentration unterhalb der kritischen Temperatur liegt, schäumt.

2. Membran nach Anspruch 1, **dadurch gekennzeichnet, daß** man bei einer Temperatur wenigstens 10 °C unterhalb der kritischen Temperatur schäumt.

3. Membran nach Anspruch 1 oder 2, **dadurch gekennzeichnet, daß** man oberhalb der kritischen Konzentration schäumt, die bei mindestens 40, vorzugsweise mindestens 43, besonders mindestens 45, insbesondere mindestens 47 cm³ (STP)/cm³ des Polymers oder Polymerengemisches liegt.

4. Membran nach einem der Ansprüche 1 bis 3, **dadurch gekennzeichnet, daß** sie aus einem amorphen oder semikristallinen Polymer oder Polymerengemisch besteht.

5. Membran nach einem der Ansprüche 1 bis 4, **dadurch gekennzeichnet, daß** man das Polymer oder Polymerengemisch nach der Formgebung bei einer unter der Glasübergangstemperatur der Polymer/Gas-Mischung liegenden Temperatur mit dem Gas belädt und sodann durch Erhöhung der Temperatur auf oberhalb der Glasübergangstemperatur der Polymer/Gas-Mischung, aber unterhalb der kritischen Temperatur der Polymer/Gas-Mischung schäumt.

6. Membran nach einem der Ansprüche 1 bis 4, **dadurch gekennzeichnet, daß** man nach der Formgebung bei einer oberhalb der Glasübergangstemperatur der Polymer/Gas-Mischung, aber unterhalb der kritischen Temperatur der Polymer/Gas-Mischung liegenden Temperatur mit dem Gas belädt und danach durch Druckverminderung schäumt.

7. Membran nach einem der Ansprüche 1 bis 4, **dadurch gekennzeichnet, daß** man vor der Formgebung eine Schmelze des Polymers oder Polymerengemisches mit dem Gas in einem Extrusionswerkzeug belädt und beim Austritt aus dem Extruder bei einer Temperatur oberhalb der Glasübergangstemperatur der Polymer/Gas-Mischung, aber unterhalb der kritischen Temperatur durch den auftretenden Druckabfall schäumt.

8. Membran nach einem der Ansprüche 1 bis 7, **dadurch gekennzeichnet, daß** man als Beladungsgas Kohlendioxid verwendet.

9. Membran nach einem der Ansprüche 1 bis 8, **dadurch gekennzeichnet, daß** man die Schaumstruktur nach dem Schäumen durch Abschrecken, vorzugsweise in einer Ethanol/Wasser-Mischung, stabilisiert.

10. Membran nach einem der Ansprüche 1 bis 9, **dadurch gekennzeichnet, daß** sie aus einem Polyimid, Polyetherimid oder Polyethersulfon oder einem wenigstens 20 % wenigstens eines dieser Polymere enthaltenden Polymerengemisch besteht.

11. Membran nach einem der Ansprüche 1 bis 10, **dadurch gekennzeichnet, daß** sie in der Form einer Flächen- oder Hohlfasermembran vorliegt.

12. Verwendung einer Membran nach einem der Ansprüche 1 bis 11 für medizinische Zwecke, insbesondere für die Hämodialyse, Hämofiltration, Hämodiafiltration, Plasmapherese. Immunotherapie, Mikro- oder Ultrafiltration oder Gastrennung.

13. Verwendung einer Membran, bestehend aus einem Polymer oder Polymerengemisch mit einer gas- bzw. flüssigkeitsdurchlässigen bikontinuierlichen Schaumstruktur mit Öffnungen im Inneren, deren Durchmesser unter 500 nm liegt, für medizinische Zwecke, insbesondere für die Hämodialyse, Hämofiltration, Hämodiafiltration, Plasmapherese, Immunotherapie, Mikro- oder Ultrafiltration oder Gastrennung.

14. Verwendung nach Anspruch 13, **dadurch gekennzeichnet, daß** der Durchmesser der Öffnungen im Inneren der Schaumstruktur unter 250, vorzugsweise unter 200 nm liegt.

15. Verwendung nach einem der Ansprüche 13 oder 14, **dadurch gekennzeichnet, daß** die Membran aus einem Polyimid, Polyetherimid oder Polyethersulfon oder einem wenigstens 20 % wenigstens eines dieser Polymere enthaltenden Polymerengemisch besteht.

16. Verwendung nach einem der Ansprüche 13 bis 15, **dadurch gekennzeichnet, daß** die Membran in der Form einer Flächen- oder Hohlfasermembran vorliegt.

## Claims

1. A membrane which can be manufactured, in which a polymer or a polymer mixture is brought into the desired form, charged with a gas at a pressure that is above atmospheric pressure prior to or after forming, and the gas-charged polymer or polymer mixture is then foamed at a temperature that is above the glass transition temperature of the polymer/gas mixture and then the foam structure is stabilized, **characterized in that** the gas-charged polymer or polymer mixture is foamed at a gas concentration in the polymer or polymer mixture which is above a critical concentration and at a temperature which is below the critical temperature for that gas concentration.

2. A membrane according to claim 1, **characterized in that** the temperature is at least 10°C below the critical temperature.

3. A membrane according to claim 1 or claim 2, **characterized in that** foaming is carried out above the critical concentration, which is at least 40, preferably at least 43, more preferably at least 45, in particular at least 47 cm³ (STP)/cm³ of polymer or polymer mixture.

4. A membrane according to one of claims 1 to 3, **characterized in that** it consists of an amorphous or semi-crystalline polymer or polymer mixture.

5. A membrane according to one of claims 1 to 4, **characterized in that** after forming, the polymer or polymer mixture is charged with the gas at a temperature that is less than the glass transition temperature of the polymer/gas mixture, and then the temperature is raised above the glass transition temperature of the polymer/gas mixture but below the critical temperature of the polymer/gas mixture.

6. A membrane according to one of claims 1 to 4, **characterized in that** after forming, the gas is charged at a temperature that is higher than the glass transition temperature of the polymer/gas mixture but less than the critical temperature of the polymer/gas mixture, and is then foamed by pressure release.

7. A membrane according to one of claims 1 to 4, **characterized in that** prior to forming, a melt of polymer or polymer mixture is charged with the gas in an extrusion tool and is foamed, by exit pressure release on exiting the extruder, at a temperature that is above the glass transition temperature of the polymer/gas mixture but less than the critical temperature.

8. A membrane according to one of claims 1 to 7, **characterized in that** carbon dioxide is used as the charging gas.

9. A membrane according to one of claims 1 to 8, **characterized in that** the foam structure is stabilized after foaming by quenching, preferably in an ethanol/water mixture.

10. A membrane according to one of claims 1 to 9, **characterized in that** it consists of a polyimide, polyetherimide or polyethersulphone or a polymer mixture containing at least 20% of at least one of said polymers.

11. A membrane according to one of claims 1 to 10, **characterized in that** it is in the form of a flat or hollow fibre membrane.

12. Use of a membrane according to one of claims 1 to 11 for medical purposes, in particular for haemodialysis, haemofiltration, haemodiafiltration, plasmapheresis, immunotherapy, micro- or ultrafiltration or for gas separation.

13. Use of a material consisting of a polymer or polymer mixture with a gas- or fluid-permeable bicontinuous foam structure with internal openings with a diameter of less than 500 nm, for medical purposes, in particular for haemodialysis, haemofiltration, haemodiafiltration, plasmaphoresis, immunotherapy, micro- or ultra-filtration or for gas separation.

14. Use according to claim 13, **characterized in that** the diameter of the openings within the foam structure is below 250 nm, preferably below 200 nm.

15. Use according to claim 13 or claim 14, **characterized in that** the membrane consists of a polyimide, polyetherimide or polyethersulphone or a polymer mixture containing at least 20% of at least one of said polymers.

16. Use according to one of claims 13 to 15, **characterized in that** the membrane is in the form of a flat or hollow fibre membrane.

## Revendications

1. Membrane pouvant être fabriquée en mettant un polymère ou un mélange de polymères sous la forme souhaitée, en chargeant le polymère ou mélange de polymères avec un gaz à pression supérieure à la pression atmosphérique avant ou après le formage, puis en faisant mousser le polymère ou mélange de polymères chargé avec le gaz à une température supérieure à la température de transition vitreuse du mélange polymère(s)/gaz et enfin en stabilisant la structure alvéolaire, **caractérisée en ce que** l'on fait mousser le polymère ou mélange de polymères chargé avec le gaz à une concentration de gaz dans le polymère ou le mélange de polymères qui est supérieure à une concentration critique et à une température qui est inférieure à la température critique pour la concentration en gaz respective.

2. Membrane selon la revendication 1, **caractérisée en ce que** le moussage est effectué à une température d'au moins 10°C au-dessous de la température critique.

3. Membrane selon la revendication 1 ou 2, **caractérisée en ce que** le moussage est effectué au-dessus de la concentration critique qui est établie à au moins 40, avantageusement au moins 43, notamment au moins 45, de préférence au moins 47 cm³ (conditions normales STP)/cm³ de polymère ou de mélange de polymères.

4. Membrane selon l'une des revendications 1 à 3, **caractérisée en ce qu'**elle est constituée d'un polymère ou d'un mélange de polymères amorphe ou semi-cristallin.

5. Membrane selon l'une des revendications 1 à 4, **caractérisée en ce que** le chargement du polymère ou du mélange de polymères avec le gaz est effectué après le formage à une température inférieure à la température de transition vitreuse du mélange polymère(s)/gaz et le moussage est ensuite effectué en augmentant la température au-dessus de la température de transition vitreuse du mélange polymère(s)/gaz, mais au-dessous de la température critique du mélange polymère(s)/gaz.

6. Membrane selon l'une des revendications 1 à 4, **caractérisée en ce que** le chargement avec le gaz est effectué après le formage à une température qui est supérieure à la température de transition vitreuse du mélange polymère(s)/gaz mais au-dessous de la température critique du mélange polymère(s)/gaz puis le moussage est obtenu en réduisant la pression.

7. Membrane selon l'une des revendications 1 à 4, **caractérisée en ce que** le chargement d'un polymère ou d'un mélange de polymères en fusion avec le gaz est effectué avant le formage dans une extrudeuse et le moussage est obtenu par la chute de pression créée à la sortie de l'extrudeuse à une température supérieure à la température de transition vitreuse du mélange polymère(s)/gaz, mais au-dessous de la température critique.

8. Membrane selon l'une des revendications 1 à 7, **caractérisée en ce que** l'on utilise du dioxyde de carbone comme gaz de chargement.

9. Membrane selon l'une des revendications 1 à 8, **caractérisée en ce que** l'on stabilise la structure alvéolaire après le moussage par trempe, avantageusement dans un mélange d'éthanol et d'eau.

10. Membrane selon l'une des revendications 1 à 9, **caractérisée en ce qu'**elle est constituée d'un polyimide, d'un polyétherimide ou d'une polyéthersulfone ou d'un mélange de polymères contenant au moins 20% d'au moins un de ces polymères.

11. Membrane selon l'une des revendications 1 à 10, **caractérisée en ce qu'**elle se trouve sous la forme d'une membrane plane ou à fibres creuses.

12. Application d'une membrane selon l'une des revendications 1 à 11 au domaine médical, notamment pour l'hémodialyse, l'hémofiltration, l'hémodiafiltration, la plasmaphérèse, l'immunothérapie, la microfiltration ou l'ultrafiltration ou la séparation de gaz.

13. Application d'une membrane, constituée d'un polymère ou d'un mélange de polymères avec une structure alvéolaire bicontinue transparente aux gaz ou aux liquides et comportant à l'intérieur des ouvertures dont le diamètre est inférieur à 500 nm, au domaine médical, notamment pour l'hémodialyse, l'hémofiltration, l'hémodiafiltration, la plasmaphérèse, l'immunothérapie, la microfiltration ou l'ultrafiltration ou la séparation de gaz.

14. Application selon la revendication 13, **caractérisée en ce que** le diamètre des ouvertures à l'intérieur de la structure alvéolaire est inférieur à 250 nm, avantageusement à 200 nm.

15. Application selon l'une des revendications 13 ou 14, **caractérisée en ce que** la membrane est constituée d'un polyimide, d'un polyétherimide ou d'une polyéthersulfone ou d'un mélange de polymères contenant au moins 20% d'au moins un de ces polymères.

16. Application selon l'une des revendications 13 à 15, **caractérisée en ce que** la membrane se trouve sous la forme d'une membrane plane ou à fibres creuses.
